# EUROPÄISCHE PATENTANMELDUNG

(11) **EP 0 890 766 A1**
(43) Veröffentlichungstag der Anmeldung: **13.01.1999**
(21) Anmeldenummer: 97111578.7
(22) Anmeldetag: 09.07.1997
(51) Int. Cl.: F16J 15/447

(54) **Labyrinthdichtung**

(71) Anmelder: Ing. Peter Weisshaar GmbH, 32107 Bad Salzuflen (DE)
(72) Erfinder: Weisshaar, Peter, Dipl.-Ing., 32108 Bad Salzuflen (DE)
(74) Vertreter: Stracke, Alexander, Dipl.-Ing.

(57) **Zusammenfassung**

Es sind Labyrinthdichtungen bekannt, durch die der Übergang zwischen einem Rotationskörper (1) und einem ortsfest dazu angeordneten Flansch (3) so abgedichtet wird, daß aus einer angrenzenden, ein gasförmiges Medium aufnehmenden Kammer (5, 10) möglichst wenig Leckgase austreten können. Trotzdem ist der Anteil der austretenden Leckgase aufgrund der baulichen Gegebenheiten, insbesondere aufgrund der bei berührungsfreien Dichtungen sich ergebenden Spaltbreiten, wirkungsgradmindernd hoch. Die Aufgabe der Erfindung ist es daher, eine Labyrinthdichtung so zu verbessern, daß der Durchgang der Leckgase verringert wird.

Dazu ist vorgesehen, daß im Bereich der die Labyrinthdichtung bildenden Rillen und Erhebungen, die konzentrisch verlaufen und die ineinandergreifen, nutartige Vertiefungen (8) vorgesehen sind, die in Richtung der Kammer (5, 10) stirnseitig offen sind.

Durch die Rotation des Rotationszylinders (1) erzeugte Fliehkraft werden die Moleküle der Leckgase entlang der nutartigen Vertiefungen (8) über deren offene Stirnseite nach außen geführt, so daß die die Labyrinthdichtung (4) tatsächlich durchtretenden Leckgase in ihrer Menge sehr gering sind.

## Beschreibung

Die vorliegende Erfindung betrifft eine Labyrinthdichtung gemäß dem Oberbegriff des Anspruchs 1.

Labyrinthdichtungen sind in den unterschiedlichsten Ausführungen bekannt. Allen gemeinsam ist, daß sie eine praktisch berührungslose Dichtung zwischen zwei relativ zueinander bewegbaren Teilen bilden.

In der Hauptsache dienen sie der Abdichtung von Kammern, die ein gasförmiges Medium enthalten, üblicherweise mit unterschiedlichen Drücken.

Nachteilig bei den bekannten Labyrinthdichtungen ist jedoch, daß diese keine absolute Dichtheit gewährleisten, d. h., daß durch die vorhandenen geringen Spalte das entsprechende Medium, wenn auch in geringer Menge, von einer Kammer in die andere gelangt.

Diese Leckverluste haben beispielsweise zur Folge, daß unerwünschte Druckabsenkungen entstehen, die eine Verminderung des Wirkungsgrades mit sich bringen.

Insbesondere an den Stirnflächen von rotierenden Zylindern ist ein Abdichten aufgrund der fehlenden Relativgeschwindigkeit in radialer Richtung mittels Labyrinthdichtungen bislang nur unvollkommen oder nur in geringem Maße möglich.

Der vorliegenden Erfindung liegt daher die Aufgabe zugrunde, eine Labyrinthdichtung der gattungsgemäßen Art so zu gestalten, daß sie mit konstruktiv einfachsten Mitteln zu einer Verbesserung der Dichtwirkung führt.

Diese Aufgabe wird durch eine Labyrinthdichtung gelöst, die die Merkmale des Anspruchs 1 aufweist.

Durch die Rotationsgeschwindigkeit des Rotationskörpers, beispielsweise eines Rotationszylinders, werden Moleküle der Leckgase, die im Stand der Technik die Labyrinthdichtung durchdringen und die sich nun in den nutartigen Vertiefungen sammeln, radial nach außen in Richtung der Kammer gefördert.

Hierdurch wird eine wesentlich bessere Dichtung erzielt, die bezüglich des sich ergebenden Wirkungsgrades vergleichbar mit konventionellen Abdichtungen sind, bei denen der Wirkungsgrad durch auftretende Reibungsverluste beeinflußt wird.

Der Einsatz einer solcherart ausgebildeten Labyrinthdichtung erlaubt eine reibungsfreie Bewegung des Rotationskörpers, die sehr hohe Drehzahlen zuläßt. Dabei ist eine lange Lebensdauer gewährleistet, bei gleichzeitig geringem Wartungsaufwand.

Da keine Schmierung der sich relativ zueinander bewegenden Teile erforderlich ist, ist auch eine sehr hohe Betriebssicherheit gegeben.

Nach einer vorteilhaften Ausgestaltung der Erfindung ist vorgesehen, daß die Rillen sowie die nutartigen Vertiefungen in einen Ring eingebracht werden, der als separates Teil mit dem Rotationskörper verbindbar ist.

Hierdurch ist eine sehr preiswerte Herstellung möglich.

Dies ist auch der Fall, wenn die flanschseitigen Rillen in einen an dem Flansch befestigbaren Ring vorgesehen sind.

Ein weiterer Gedanke der Erfindung sieht vor, daß die nutartigen Vertiefungen sich bis in den Bereich der letzten, von der Kammer abgewandten Rille oder geringfügig darüber hinaus erstrecken, so daß alle, durch die zwischen den Erhebungen und Rillen gebildeten Spalten geförderten Moleküle in den Vertiefungen gesammelt und in Richtung der Kammer zurückgefördert werden.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teillängsschnitt durch eine mit einer erfindungsgemäßen Labyrinthdichtung versehene Vorrichtung,
- Figur 2: eine Einzelheit der Vorrichtung gemäß der Kennzeichnung II in Figur 1,
- Figur 3: eine Vorderansicht auf die Einzelheit gesehen in Richtung des Pfeiles III in Figur 2,
- Figur 4: eine Unteransicht auf die Einzelheit gesehen in Richtung des Preiles IV in Figur 1,
- Figur 5: eine Draufsicht auf die Einzelheit gesehen in Richtung des Pfeiles V in Figur 1.

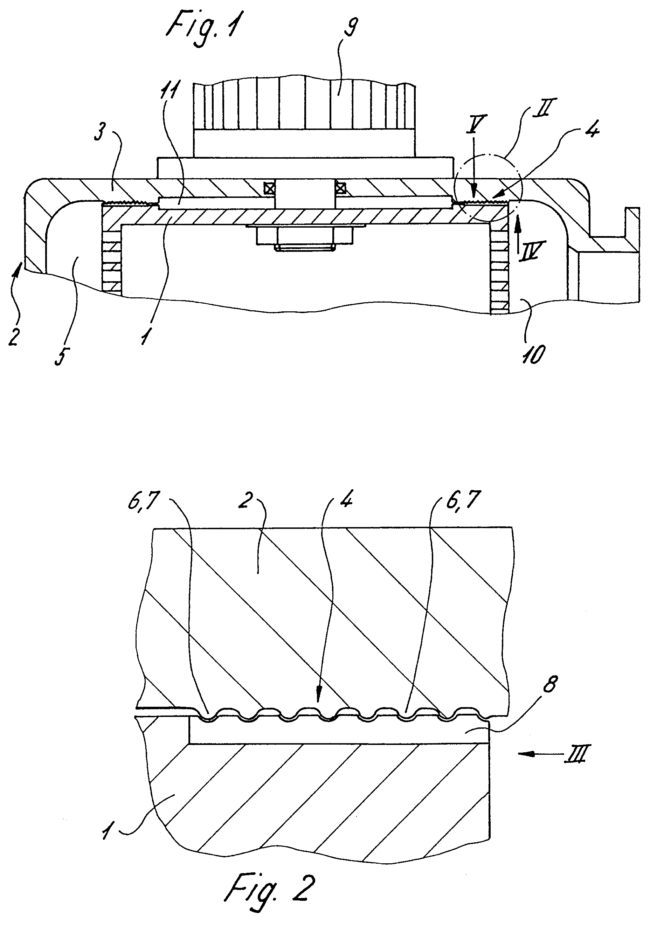

In der Figur 1 ist der Ausschnitt eines Rotationsdichters dargestellt, der in seinem Grundaufbau aus einem Rotationszylinder 1 und einem diesen umschließenden Gehäuse 2 besteht, das einen FLansch 3 aufweist, der den Boden des Gehäuses 2 bildet.

Über einen Motor 9 ist der Rotationszylinder 1 antreibbar.

Zwischen dem Flansch 3 und der zugewandten Stirnseite des Rotationszylinders 1 ist eine Labyrinthdichtung 4 angeordnet, die in diesem Verbindungsbereich eine Abdichtung zwischen Kammern 5, 10 und einem Zwischenraum 11 bildet. Dabei werden die Kammern 5, 10, in denen sich ein gasförmiges Medium mit einem höheren Druck befindet, durch den Rotationszylidner 1 sowie die Wandung des Gehäuses 2 begrenzt, während der Zwischenraum 11 durch einen Teil der Stirnseite des Rotationszylinders 1 und den Flansch 3 gebildet wird. Der Druck des in dem Zwischenraum 11 befindlichen Mediums ist geringer als der in den Kammern 5, 10.

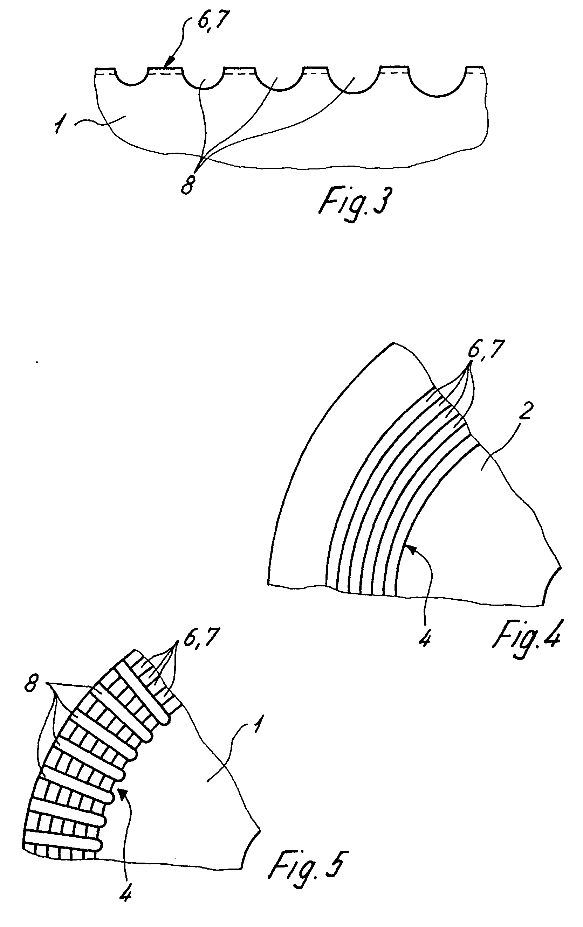

Wie insbesondere die Figuren 2 bis 5 sehr deutlich zeigen, besteht die Labyrihtdichtung 4 aus einer Mehrzahl konzentrisch angeordneter Rillen 6 und Erhebungen 7, die jeweils abwechselnd im Rotationszylinder 1 und im Flansch 3 angeordnet sind und die in ihrem Querschnitt so ausgestaltet sind, daß sie unter geringstmöglicher Spaltbildung ineinandergreifen.

Weiter ist zu erkennen, daß der Rotationszylinder 1 im Bereich seiner Rillen/Erhebungen 6, 7 eine Vielzahl von im gleichen Winkelabstand zueinander stehende, radial sich erstreckende nutartige Vertiefungen aufweist, die zur Außenseite des Rotationszylinders 1 hin offen sind und die sich geringfügig über die Breite der Labyrinthdichtung 4 erstrecken.

Dabei weisen die nutartigen Vertiefungen 8 eine größere Tiefe auf als die Rillen 6.

Die entlang der Labyrinthdichtung 4 in die nutartigen Vertiefungen 8 eindringenden Gasmoleküle werden durch Fliehkräfte, die durch die Rotation des Rotationszylinders 1 entstehen, mehrheitlich in radialer Richtung nach außen befördert.

Hierdurch wird eine für berührungsfreie Dichtungen bislang nicht für möglich gehaltene Dichtheit erzielt.

### Bezugszeichenliste

- 1: Rotationskörper
- 2: Gehäuse
- 3: Flansch
- 4: Labyrinthdichtung
- 5: Kammer
- 6: Rille
- 7: Erhebung
- 8: nutartige Vertiefung
- 9: Motor
- 10: Kammer
- 11: Zwischenraum

## Patentansprüche

1. Labyrinthdichtung zwischen der Stirnseite eines Rotationskörpers (1) und einem ortsfesten Flansch (3), der eine Begrenzung einer ein vorzugsweise gasförmiges Medium aufnehmenden Kammer (5, 10) bildet, mit einer Mehrzahl rotationskörperseitig vorgesehenen konzentrisch verlaufenden Rillen (6), in die flanschseitig vorgesehene, im Querschnitt den Rillen (6) angepaßte Erhebungen (7) berührungslos mit geringstmöglichem Abstand eingreifen, **dadurch gekennzeichnet, daß** im Bereich der Rillen (6) oder Erhebungen (7) radial verlaufende, nutartige Vertiefungen (8) vorgesehen sind, die in Richtung der Kammer (5, 10) stirnseitig offen sind.

2. Labyrinthdichtung nach Anspruch 1, **dadurch gekennzeichnet, daß** die nutartigen Vertiefungen (8) im Bereich der Rillen/Erhebungen (6, 7) des Rotationskörpers (1) vorgesehen sind.

3. Labyrinthdichtung nach Anspruch 1 oder 2, **dadurch gekennzeichnet, daß** sich die nutartigen Vertiefungen (8) über die gesamte durch die Rillen (6) und Erhebungen (7) gebildete Breite der Labyrinthdichtung (4) erstrecken, vorzugsweise geringfügig darüber hinaus.

4. Labyrinthdichtung nach Anspruch 1 oder 2, **dadurch gekennzeichnet, daß** die nutartigen Vertiefungen (8) in gleichem Winkelabstand zueinander angeordnet sind.

5. Labyrinthdichtung nach Anspruch 1, **dadurch gekennzeichnet, daß** die Labyrinthdichtung (4) in einem mit dem Rotationskörper (1) und/oder dem Flansch (3) verbindbaren Ring vorgesehen sind.
